# EUROPÄISCHE PATENTSCHRIFT

(11) **EP 2 244 144 B1**
(45) Veröffentlichungstag und Bekanntmachung des Hinweises auf die Patenterteilung: **13.03.2013**
(21) Anmeldenummer: 10157566.0
(22) Anmeldetag: 24.03.2010
(51) Int. Cl.: G05B 19/10, D06F 39/00

(54) **Bedienverfahren und Bedieneinrichtung für ein Elektro-Hausgerät**
Method and device for operating an electric household appliance
Procédé de commande et dispositif de commande pour un appareil électroménager

(30) Priorität: 22.04.2009 DE 102009019078
(43) Veröffentlichungstag der Anmeldung: 27.10.2010
(73) Patentinhaber: E.G.O. Control Systems GmbH, 72336 Balingen (DE)
(72) Erfinder: Heicks, Wilhelm, 72351 Geislingen (DE)
(74) Vertreter: Patentanwälte Ruff, Wilhelm, Beier, Dauster & Partner

(56) Entgegenhaltungen:
- EP-B1- 0 898 003
- FR-A1- 2 585 856

## Beschreibung

### Beschreibung

Bedienverfahren und Bedieneinrichtung für ein Elektro-Hausqerät

### Anwendungsgebiet und Stand der Technik

Die Erfindung betrifft ein Bedienverfahren für ein Elektro-Hausgerät gemäß dem Oberbegriff des Anspruchs 1 sowie eine zur Durchführung des Bedienverfahrens ausgebildete Bedieneinrichtung mit einem Bedienelement und mit einer Steuerung, die zur Durchführung des Bedienverfahrens ausgebildet bzw. programmiert ist.

Es ist aus der DE 35 27 968 A1 eine Waschmaschine oder ein Bedienverfahren bekannt, bei denen beispielsweise bei einem Wäschetrockner an einem Drehknebel als Bedienelement durch Einstellen einer bestimmten Drehposition ein bestimmtes Ablaufprogramm eingestellt wird, beispielsweise ein bestimmtes Trockenprogramm. Durch Betätigen mit einem separaten Schalter wird dann das eingestellte bzw. vorgewählte Ablaufprogramm gestartet.

EP-81-0898003 offenbart eine Waschmaschine mit einem Bedienverfahren und einer Bedieneinrichtung, die eine Display-Anzeige mit in Klartext darstellbaren und auswertbaren Ablaufprogramm aufweist.

### Aufgabe und Lösung

Der Erfindung liegt die Aufgabe zugrunde, ein eingangs genanntes Bedienverfahren sowie eine entsprechende Bedieneinrichtung zu schaffen, mit denen Nachteile des Standes der Technik vermieden werden können und insbesondere ein sehr einfaches Bedienverfahren zur Verfügung gestellt werden kann, welches auch mit einer sehr einfach ausgebildeten Bedieneinrichtung durchgeführt werden kann.

Gelöst wird diese Aufgabe durch ein Bedienverfahren mit den Merkmalen des Anspruchs 1 sowie eine Bedieneinrichtung mit den Merkmalen des Anspruchs 10. Vorteilhafte sowie bevorzugte Ausgestaltungen der Erfindung sind Gegenstand der weiteren Ansprüche und werden im folgenden näher erläutert. Manche der nachfolgend aufgezählten Merkmale werden nur für das Bedienverfahren oder nur für die Bedieneinrichtung erläutert. Sie sollen jedoch unabhängig davon sowohl für das Bedienverfahren als auch für die Bedieneinrichtung gelten können. Der Wortlaut der Ansprüche wird durch ausdrückliche Bezugnahme zum Inhalt der Beschreibung gemacht.

Das Bedienelement der Bedieneinrichtung ist in Form eines bewegbaren Drehknebels oder Schiebereglers ausgebildet, kann also gedreht oder verschoben werden. Drehknebel bzw. Drehregler werden dabei wegen der einfacheren Konstruktion und Lagerung bevorzugt. Das Bedienelement beeinflusst bzw. wirkt auf ein Schaltgerät ein, welches eine Drehposition oder eine Schiebeposition bzw. eine Drehung oder ein Verschieben erfasst. Unter dem allgemeinen Begriff eines Schaltgeräts soll hier insbesondere auch ein Codierer, ein Absolutgeber, ein Encoder oder ein Potentiometer verstanden werden bzw. umfasst sein. Bei Schaltgeräten, die nur eine relative Drehung und an sich keine absolute Drehstellung erfassen, ist es von großem Vorteil, deren Drehung bzw. aktuelle Drehstellung anzuzeigen. Dies wird nachfolgend noch näher erläutert.

Das Schaltgerät wiederum ist mit einer Steuerung der Bedieneinrichtung oder des Elektro-Hausgeräts verbunden, wobei die Steuerung die von dem Schaltgerät erfasste Drehung bzw. Drehposition oder Schiebeposition erkennt bzw. auswertet und in einen Bedienbefehl oder eine Bedienfunktion für das Elektro-Hausgerät umsetzt. Erfindungsgemäß werden in einem ersten Bedienschritt durch Bewegen des Bedienelements in eine Drehposition mit einem bestimmten Drehwinkel oder in eine Schiebeposition an einen bestimmten Schiebepunkt ein an einer Bedienblende der Bedieneinrichtung gekennzeichneter Menüpunkt bzw. eine gekennzeichnete Bedienfunktion vorgewählt. In einem zweiten Bedienschritt kann dann durch Eindrücken, alternativ auch durch Herausziehen, des Bedienelements in die Bedieneinrichtung hinein ein Schaltvorgang ausgelöst werden, der diese Vorauswahl des Menüpunktes bzw. der Bedienfunktion bestätigt. Dies kann dann vorteilhaft eine endgültige Eingabe der Bedienfunktion sein. Die Steuerung erkennt dieses Eindrücken des Bedienelementes als Schaltvorgang, wie eingangs erläutert worden ist, und löst die damit bestätigte Bedienfunktion an dem Elektro-Hausgerät aus bzw. übernimmt den dadurch bestätigten Menüpunkt in ein Ablaufprogramm.

Somit kann also sehr einfach auf den eingangs genannten, zusätzlichen separaten Schalter zum Starten eines Ablaufprogramms oder zum Bestätigen eines ausgewählten Menüpunktes verzichtet werden. Das Drücken auf das Bedienelement, alternativ das Ziehen daran, ist auch eine intuitiv verständliche und leicht durchzuführende Aktion für eine Bedienperson. Durch das Ziehen können weitere Möglichkeiten gewählt werden, möglicherweise auch eine weitere Ebene für Optionen bzw. Funktionen. Es kann für ein Ablaufprogramm eine einzige Option gewählt werden oder auch mehrere Optionen.

Eine solche Ein-Knopf-Bedienung benötigt keine zusätzlichen Tasten oder Drehwähler, da das eindrückbare Bedienelement selbst diese Funktion enthält. Des weiteren hat der Benutzer auch nach erneutem Herantreten an das Gerät sofort einen Überblick über die eingestellten Menüpunkte bzw. Bedienfunktionen und kann auch ein Programmende durch beispielsweise blinkende LED odgl. erkennen. Mit nur einer Bedieneinrichtung, vorteilhaft als eindrückbarer Drehknebel, können sowohl unterschiedliche Geräteklassen wie Einstiegsmodell oder Topmodell als auch unterschiedliche Marken bzw. Vertriebskanäle realisiert werden. Nur durch die Gerätekonfiguration mit Software kann somit auch erst am Ende in der Produktion die Gerätevariante festgelegt werden, vorteilhaft zusammen mit einer Bedruckung einer Bedienblende. Soll eine Bedienfunktion nicht angeboten werden, so wird diese Schalterposition eben per Software einfach nicht belegt, und mechanische Rastpositionen des Bedienelements könnten durch den Einsatz unterschiedlicher Rastwerke realisiert werden, was jedoch die Flexibilität wieder etwas einschränken würde.

Eine solche Drehbarkeit oder Verschiebbarkeit des Bedienelements kann in einer ersten grundsätzlichen Ausbildung der Erfindung eine beliebige Drehbarkeit oder Verschiebung sein, insbesondere mit mehreren möglichen Drehungen hintereinander bzw. kontinuierlich drehbar. So kann das Bedienelement direkt an eine bestimmte Position bewegt werden.

In einer zweiten anderen grundsätzlichen Ausgestaltung der Erfindung, die weiter unten noch näher erläutert wird, kann das Bedienelement immer nur geringfügig gedreht oder verschoben werden an einen Anschlag. Dies ist auch als Toggle-Prinzip bekannt. Eine Drehposition oder Schiebeposition des Bedienelements ändert sich nicht tatsächlich in erheblichem Maß sozusagen in einer Bewegung, sondern dies erfolgt in kleinen diskreten Schritten durch mehrfaches Drehen oder Verschieben, wobei diese kleinen Schritte eben der maximalen Drehbarkeit bzw. Bewegbarkeit entsprechen. Eine bestimmte Position wird dann nicht tatsächlich erreicht sondern sozusagen virtuell.

In weiterer Ausgestaltung der Erfindung ist es möglich, dass eine von der Drehposition oder Schiebeposition des Bedienelements abhängige Bedienfunktion des Bedienverfahrens nur für eine Aktivierung oder Deaktivierung vorgesehen ist, also nur als das Ablaufprogramm begleitende Zusatz-Option. Diese kann in einem solchen Ablaufprogramm vorhanden sein, muss aber nicht vorhanden sein oder ausgewählt werden. Wenn für die Einstellung eines Ablaufprogramms einer von mehreren Werten zwingend eingestellt werden muss, kann ein anderes Auswahlverfahren vorgesehen sein, beispielsweise durch unterschiedliche Drehpositionen oder Schiebepositionen des Bedienelements.

Es kann vorgesehen sein, dass einige der Drehpositionen oder Schiebepositionen für verschiedene, vorgegebene Ablaufprogramme stehen. Wird das Bedienelement in die entsprechende Drehposition oder Schiebeposition gebracht, so werden diese der Position entsprechenden Ablaufprogramme voreingestellt. Durch Drücken auf das Bedienelement kann dann genau dieses Ablaufprogramm am Elektro-Hausgerät starten, insbesondere sofort starten ohne weitere Eingabe.

Wie zuvor kurz angesprochen worden ist, kann anstelle eines direkten Vorwählens eines an einer Bedienblende der Bedieneinrichtung gekennzeichneten Menüpunktes bzw. einer Bedienfunktion durch Drehen einer bestimmten Markierung des Bedienelements an diese Position das Bedienelement in einem Stück mehrfach ein geringes Stück gedreht oder verschoben werden. Mit jedem Drehvorgang oder Schiebevorgang springt dann sozusagen die Funktion der Vorauswahl von einer Nullstellung oder einem zuvor vorgewählten Menüpunkt auf diesen Menüpunkt zu, also beispielsweise in drei bis fünf oder noch mehr Schritten. Eine solche zyklische Weiterschaltung zwischen einzelnen Menüpunkten bzw. Bedienfunktionen wird dann vorteilhaft an einer Leuchtanzeige odgl., die insbesondere jedem Menüpunkt bzw. jeder Bedienfunktion zugeordnet ist, angezeigt. Leuchtet eine Anzeige des gewünschten Menüpunktes bzw. der gewünschten Bedienfunktion nach mehrfachem Drehen oder Verschieben auf, so entspricht dies dem einzigen Drehvorgang gemäß der zuvor im Detail beschriebenen Ausgestaltung der Erfindung und dieser Menüpunkt bzw. diese Bedienfunktion ist vorausgewählt. Dann kann wieder durch Eindrücken des Bedienelements diese Vorauswahl bestätigt werden wie zuvor beschrieben. Der Vorteil bei dieser Ausgestaltung der Erfindung liegt darin, dass ein einfach ausgebildetes Schaltgerät verwendet werden kann, das sozusagen durch einen einfachen mechanischen Schalter das Erreichen des Anschlages erfasst. Ein Drehwinkel für ein solches geringfügiges Drehen kann in einem Bereich zwischen 5° und 45° liegen, vorteilhaft etwa 20° bis 30° betragen.

Gemäß einer grundsätzlichen Ausbildung der Erfindung können verschiedene Ablaufprogramme, Menüpunkte oder sonstige Optionen an der Bedieneinrichtung, insbesondere an einer deren Oberfläche bildenden Bedienblende, durch Markierungen angezeichnet sein. Dann kann auf Anzeigen wie Leuchtanzeigen, LED odgl. verzichtet werden.

Gemäß einer anderen grundsätzlichen Ausbildung der Erfindung mit etwas mehr Aufwand können einigen Drehpositionen oder Schiebepositionen, insbesondere jeder dieser Positionen, Leuchtanzeigen zugeordnet sein, vorteilhaft LED. Diese können durch einen Funktionszustand, insbesondere ein Blinken, das Einstellen der entsprechenden Drehposition oder Schiebeposition mittels des Bedienelements anzeigen. Diese Anzeige kann vorteilhaft nach Drücken auf das Bedienelement dieses Drücken bzw. die damit ausgelöste Auswahl oder ein Starten durch einen anderen Funktionszustand anzeigen. Hierfür eignet sich dann beispielsweise ein Dauerleuchten. Anstatt eines Blinkens oder Dauerleuchtens können auch unterschiedliche Helligkeiten verwendet werden, alternativ auch unterschiedliche Farben. Vorteilhaft zeigt die Anzeige erst nach Auswahl oder Starten etwas an und noch nicht vorher, da dies ja durch die Stellung des Bedienelements veranschaulicht werden kann.

In weiterer Ausbildung der Erfindung kann vorgesehen sein, dass einem durchzuführenden Ablaufprogramm am Elektro-Hausgerät in manchen der Drehpositionen oder Schiebepositionen des Bedienelements eine zu dem Ablaufprogramm zusätzlich wählbare mögliche Option zugeordnet ist. Dies kann beispielsweise bei einer Waschmaschine die Option "Vorwaschgang" sein. Durch Einstellen der entsprechenden Drehposition oder Schiebeposition, die vorteilhaft benachbart ist zu derjenigen des übergeordneten Ablaufprogramms, kann diese Option voreingestellt werden und durch Drücken auf das Bedienelement bestätigt werden. Nach dem Bestätigen der Option für das Ablaufprogramm kann durch Einstellen einer weiteren Drehposition oder Schiebeposition eines von mehreren, der jeweiligen bzw. den verschiedenen Positionen zugeordnetes Ablaufprogramm voreingestellt werden. Auch dieses kann dann durch Drücken auf das Bedienelement gestartet werden und läuft dann mit der gewählten Option ab. Bei dieser Variante wird also zuerst eine Option für ein Ablaufprogramm ausgewählt und bestätigt und dann das Ablaufprogramm selbst ausgewählt und gestartet.

Alternativ dazu ist es möglich, zuerst das Ablaufprogramm auf vorbeschriebene Art und Weise auszuwählen und voreinzustellen. Anschließend wird die Option durch Einstellen der entsprechenden Position des Bedienelementes und Drücken auf das Bedienelement ausgewählt bzw. bestätigt und dann das Ablaufprogramm gestartet. Dabei kann das Ablaufprogramm entweder durch Drücken auf das Bedienelement zum Bestätigen der Option gleich gestartet werden oder durch ein weiteres Drücken auf das Bedienelement danach. Diese beiden vorbeschriebenen Abläufe können vorteilhaft durch eine vorbeschriebene Leuchtanzeige begleitet bzw. für eine Bedienperson dargestellt werden.

Wie vorbeschrieben worden ist, kann anstelle eines Drückens auf das Bedienelement auch daran gezogen werden mit der gleichen Folge. Alternativ kann ein eindrückbares Bedienelement herausgezogen werden als Auslösen einer nochmals weiteren Schaltfunktion oder Betätigungsfunktion. Dadurch können noch mehr Bedienmöglichkeiten bzw. Bedienfunktionen mit einem einzigen Bedienelement erreicht werden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im folgenden näher erläutert. In den Zeichnungen zeigen:
- Fig. 1: eine Draufsicht auf eine Bedieneinrichtung zur Durchführung des erfindungsgemäßen Bedienverfahrens mit verschiedenen Be- dienschritten in einer ersten Ausgestaltung der Erfindung und
- Fig. 2: eine Abwandlung der Darstellung aus Fig. 1 mit einem Bedien- verfahren in einer zweiten Ausgestaltung der Erfindung.

### Detaillierte Beschreibung der Ausführungsbeispiele

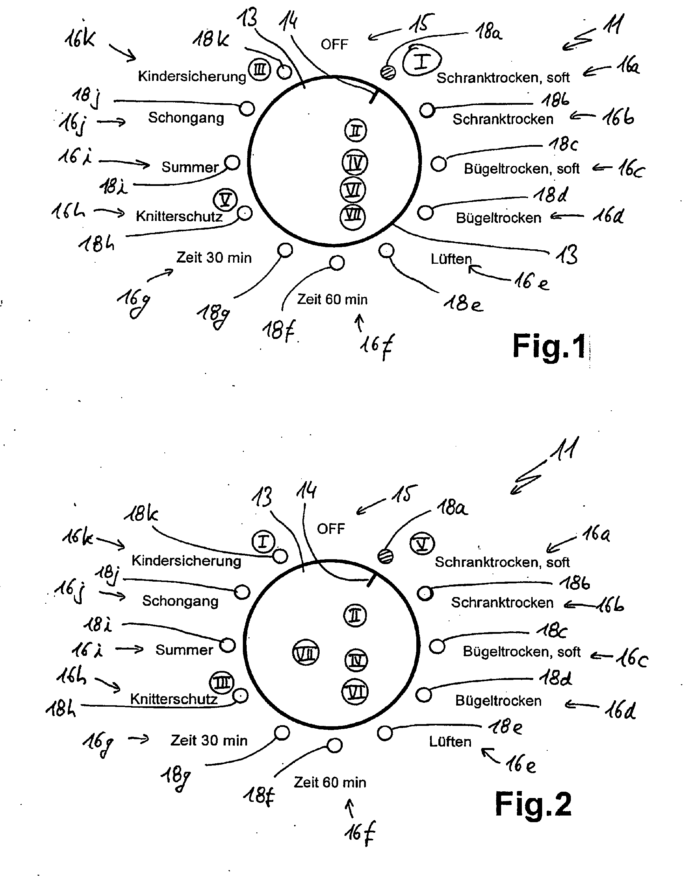

In Fig. 1 ist eine Bedieneinrichtung 11 schematisch dargestellt, wie sie vorteilhaft an der Vorderseite oder Frontblende eines nicht näher dargestellten Wäschetrockners vorgesehen ist. Die Bedieneinrichtung 11 weist einen Drehknebel 13 auf mit einem Stellungsanzeiger 14. Der Drehknebel 13 ist mit einem nicht dargestellten Schaltgerät verbunden bzw. sitzt auf dessen Achse, wobei das Schaltgerät die entsprechende Drehstellung erkennt und an eine Steuerung der Bedieneinrichtung 11 bzw. des Wäschetrockners weitergibt. Dieser Drehknebel 13 ist, wie eingangs erläutert, eben so ausgebildet, dass ein Daraufdrücken, vorteilhaft ein Bewegen um wenige Millimeter, von dem vorstehend genannten Schaltgerät hinter dem Drehknebel 13 oder einer sonstigen Schalteinrichtung erkannt werden kann.

Um den Drehknebel herum sind an der Bedieneinrichtung 11 verschiedene Befehle beispielsweise durch Aufdruckung dargestellt. Dies sind eine AUS-Stellung 15 an oberster Stelle und dann im Kreis verteilt verschiedene Menüpunkte 16a bis 16k, deren Bedeutung selbsterklärend ist. Die Menüpunkte 16a bis 16e sind dabei verschiedene Programme und die Menüpunkte 16f und 16g sind feste Betriebsdauern. Die Menüpunkte 16h bis 16k sind Optionen, die zu einem Programm gemäß der Menüpunkte 16a bis 16e zusätzlich gewählt werden können, aber nicht müssen.

Den Menüpunkten 16a bis 16k sind jeweils LED 18a bis 18k zugeordnet. Diese LED 18a bis 18k werden bezüglich ihrer Funktion bzw. Ansteuerung nachfolgend noch näher erläutert.

Durch Drehen des Drehknebels 13 mit dem Stellungsanzeiger 14 auf einen Menüpunkt 16 wird dieser vorgewählt. Beim erfindungsgemäßen Bedienverfahren wird der Drehknebel 13 aus der AUS-Stellung 15 heraus zur Vorauswahl eines Menüpunkts gedreht, beispielsweise in einem ersten Schritt I gemäß Fig. 1 auf den Menüpunkt 16a "Schranktrocken, soft". Diese Vorauswahl des Menüpunkts 16a wird dann durch Drücken auf den Drehknebel 13 bestätigt. Dieses Drücken auf den Drehknebel 13 ist mit dem Schritt II des Bedienverfahrens gekennzeichnet und bestätigt die Vorauswahl des Menüpunkts 16a für ein Ablaufprogramm. Sollen keine weiteren Eingaben mehr erfolgen, kann bereits jetzt der Start erfolgen, möglicherweise durch erneutes Drücken auf den Drehknebel 13 oder durch Ablauf einer vorgegebenen Zeit.

Nach dem Drücken gemäß Schritt II leuchtet die LED 18a auf, beispielsweise blinkend. Gemäß einer Alternative kann die LED 18a bereits beim

Drehen in die entsprechende Stellung aufleuchten und nicht erst nach dem Drücken. Gemäß einer anderen Alternative kann die LED 18a erst nach dem Schritt II eine Zustandsänderung anzeigen.

Anschließend kann der Drehknebel 13 gemäß dem Schritt III zum Menüpunkt 16k "Kindersicherung" gedreht werden. Wie zuvor beschrieben kann erneut die LED 18k am Menüpunkt 16k nach dem Drehen gemäß Schritt III aktiviert werden, beispielsweise wieder durch Blinken. Vorteilhaft wird jedoch zuerst erneut der Drehknebel 13 gedrückt gemäß Schritt IV und dann erst beginnt die LED 18k zu blinken.

Dann könnte also das Ablaufprogramm "Schranktrocken, soft" mit der Option "Kindersicherung" starten. Hierzu müsste dann eine Bedienperson erneut auf den Drehknebel 13 drücken. Ähnlich könnte direkt nach Vorauswahl und Bestätigung des Menüpunktes gemäß der Schritte I und II das Ablaufprogramm starten, also ohne Option.

Dargestellt in Fig. 1 ist jedoch noch die Auswahl einer weiteren Option, indem nämlich der Drehknebel 13 in die Drehposition des Menüpunkts 16h "Knitterschutz" gedreht wird gemäß Schritt V. Dann wird gemäß Schritt VI erneut auf den Drehknebel 13 gedrückt zur Bestätigung des Menüpunkts und auch dieser wird in das Ablaufprogramm übernommen. Damit sind die gewünschten Optionen übernommen bzw. für das Ablaufprogramm bestimmt und durch ein letztes Drücken gemäß Schritt VII auf den Drehknebel 13 wird das Ablaufprogramm gestartet.

Während des Ablaufprogramms können die LED 18a, 18h und 18k ihren Aktivierungszustand ändern. Wenn sie zuvor beispielsweise geblinkt haben nach der jeweiligen Vorauswahl und Bestätigung, so können sie nun dauerhaft leuchten. Dies bedeutet, dass nun das gewählte Programm abläuft mit den gewählten Optionen. Nach Programmende können sie wiederum anders leuchten.

Bei der alternativen Ausgestaltung eines erfindungsgemäßen Bedienverfahrens gemäß Fig. 2 wird nicht zuerst wie bei Fig. 1 das grundsätzliche Ablaufprogramm ausgewählt, sondern zuerst die Optionen. In einem Schritt I wird also die Option "Kindersicherung" des Menüpunkts 16k gewählt und dann durch Drücken auf den Drehknebel 13 in einem Schritt II bestätigt. Dann wird eine weitere Option "Knitterschutz" gemäß Menüpunkt 16h in einem Schritt III vorausgewählt und durch Drücken auf den Drehknebel 13 in einem Schritt IV bestätigt. Anschließend wird durch Drehen in die Stellung des Menüpunkts 16a "Schranktrocken, soft" grundsätzlich das entsprechende Ablaufprogramm vorausgewählt in einem Schritt V und dann durch Drücken auf den Drehknebel 13 im Schritt VI bestätigt. Entweder startet das Ablaufprogramm dann selbsttätig nach dem Schritt VI nach einer gewissen vorgegebenen Zeit oder alternativ wird erneut auf den Drehknebel 13 gedrückt zum Starten.

Anhand der Ausführungsbeispiele in den Fig. 1 und 2 am beliebig drehbaren Drehknebel 13 als Bedienelement kann man sich leicht die vorbeschriebene, grundsätzlich andere Ausgestaltung der Erfindung als ein nur geringfügig drehbares bzw. verschiebbares Bedienelement vorstellen. Anstelle der zuvor beschriebenen umfassenden Drehung des Drehknebels 13 in eine der Positionen der Menüpunkte 16 bzw. der sie darstellenden LED 18 wird der Drehknebel 13 nur ein geringes Stück nach rechts oder nach links gedreht an einen Anschlag. Der Anschlag ist vorteilhaft so ausgebildet, dass diese geringe Drehung den Drehwinkel zwischen zwei benachbarten LED 18 bildet, also etwa 30° beträgt. Die zu jedem Zeitpunkt durch mehrfaches geringes Drehen eingestellte gesamte Drehposition bzw. der entsprechende Menüpunkt 16 wird dann durch ein Leuchten oder Blinken der LED 18 dargestellt. Um also beispielsweise bei der Fig. 1 auf die Bedienfunktion 16e "Lüften" zu kommen, muss der Drehknebel 13 fünfmal nach rechts an einen Anschlag gedreht werden. Dann kann durch Drücken auf den Drehknebel 13, wie zuvor beschrieben, der eingestellte Menüpunkt bestätigt werden.

Der Vorteil eines solchermaßen beschriebenen Bedienverfahrens und einer entsprechenden Bedieneinrichtung liegt vor allem darin, dass mit nur einem Drehknebel bzw. mit nur einem allgemeinen Bedienelement sowohl ein Programm als auch Optionen für dieses Programm eingegeben werden können. Eine abweichende Konfiguration ist über Software in der Steuerung leicht möglich.

## Patentansprüche

1. Bedienverfahren für ein Elektro-Hausgerät mit einer Bedieneinrichtung, die ein Bedienelement in Form eines bewegbaren Drehknebels oder Schiebereglers aufweist mit einem von dem Bedienelement beeinflussten Schaltgerät, das eine Drehposition oder Schiebeposition bzw. ein Bewegen des Bedienelements erfasst und mit einer Steuerung verbunden ist zur Umsetzung in einen Bedienbefehl bzw. in eine Bedienfunktion für das Elektro-Hausgerät, **dadurch gekennzeichnet, dass** verschiedene Ablaufprogramme, Menüpunkte oder sonstige Optionen an der Bedieneinrichtung, nämlich an einer deren Oberfläche bildenden Bedienblende, durch Markierungen angezeichnet sind, wobei in einem ersten Bedienschritt durch einmaliges oder mehrmaliges Bewegen des Bedienelements in eine Drehposition mit einem bestimmten Drehwinkel oder in eine Schiebeposition an einen bestimmten Schiebepunkt ein an der Bedienblende gekennzeichneter Menüpunkt bzw. eine Bedienfunktion als Vorauswahl vorgewählt ist, wobei in einem zweiten Bedienschritt durch Eindrücken des gesamten Bedienelements in die Bedieneinrichtung hinein ein Schaltvorgang ausgelöst wird um diese Vorauswahl zu bestätigen als endgültige Eingabe der Bedienfunktion, wozu die Steuerung das Eindrücken des Bedienelements als Schaltvorgang erkennt um die damit bestätigte Bedienfunktion an dem Elektro-Hausgerät auszulösen.

2. Bedienverfahren nach Anspruch 1, **dadurch gekennzeichnet, dass** die von der Drehposition oder Schiebeposition bzw. einem Bewegen des Bedienelements abhängigen Bedienfunktionen nur für eine Aktivierung oder Deaktivierung vorgesehen sind, vorzugsweise als ablaufbegleitende Zusatz-Optionen eines Programmablaufs,
' und nicht für die Einstellung eines von mehreren Werten eines Ablaufprogramms als eine Bedienfunktion.

3. Bedienverfahren nach Anspruch 1 oder 2, **dadurch gekennzeichnet, dass** einige der Drehpositionen oder Schiebepositionen verschiedene vorgegebene Ablaufprogramme sind, die durch entsprechendes Drehen oder Verschieben des Bedienelements in die entsprechende Drehposition oder Schiebeposition voreingestellt werden, wobei dann die Steuerung durch Drücken auf das Bedienelement diese Ablaufprogramme am Elektro-Hausgerät startet.

4. Bedienverfahren nach Anspruch 1 oder 2, **dadurch gekennzeichnet, dass** einige der Drehpositionen oder Schiebepositionen verschiedene vorgegebene Ablaufprogramme sind, die durch entsprechendes Drehen oder Verschieben des Bedienelements in die entsprechende Drehposition oder Schiebeposition voreingestellt werden, wobei dann die Steuerung durch Zeitablauf diese Ablaufprogramme am Elektro-Hausgerät startet, vorzugsweise nach zwei bis zehn Sekunden.

5. Bedienverfahren nach einem der vorhergehenden Ansprüche, **dadurch gekennzeichnet, dass** es ohne Leuchtanzeigen odgl. durchgeführt wird.

6. Bedienverfahren nach einem der Ansprüche 1 bis 4, **dadurch gekennzeichnet, dass** jeder Drehposition oder Schiebeposition eine Leuchtanzeige, insbesondere eine LED, zugeordnet ist und mit einem Funktionszustand, insbesondere Blinken, das Einstellen der entsprechenden Drehposition oder Schiebeposition mit dem Bedienelement anzeigt, wobei vorzugsweise die Leuchtanzeige nach
° Eindrücken des Bedienelements dies durch einen anderen Funktionszustand anzeigt, insbesondere durch Dauerleuchten.

7. Bedienverfahren nach einem der vorhergehenden Ansprüche, **dadurch gekennzeichnet, dass** einem durchzuführenden Ablaufprogramm in manchen der Drehpositionen oder Schiebepositionen eine zu dem Ablaufprogramm mögliche zusätzlich wählbare Option zugeordnet ist, die durch Einstellen der entsprechenden Drehposition oder Schiebeposition voreingestellt und dann durch Drücken des Bedienelements bestätigt wird, wobei nach dem Voreinstellen des Ablaufprogramms, insbesondere durch ein Drücken auf das Bedienelement in der entsprechenden Drehposition oder Schiebeposition, eine Option durch Einstellen der entsprechenden Drehposition oder Schiebeposition und Drücken auf das Bedienelement bestätigt wird und dann das Ablaufprogramm gestartet wird, vorzugsweise durch ein weiteres Drücken auf das Bedienelement.

8. Bedienverfahren nach einem der Ansprüche 1 bis 6, **dadurch gekennzeichnet, dass** einem durchzuführenden Ablaufprogramm in manchen der Drehpositionen oder Schiebepositionen eine zu dem Ablaufprogramm mögliche zusätzlich wählbare Option zugeordnet ist, die durch Einstellen der entsprechenden Drehposition oder Schiebeposition voreingestellt und dann durch Drücken des Bedienelements bestätigt wird, wobei nach Bestätigen einer Option durch Einstellen einer weiteren Drehposition oder Schiebeposition eines von mehreren, den verschiedenen Positionen zugeordneten Ablaufprogrammen voreingestellt wird und durch Drücken auf das Bedienelement gestartet wird.

9. Bedienverfahren nach einem der vorhergehenden Ansprüche, **dadurch gekennzeichnet, dass** durch Ziehen an dem Bedienelement eine weitere Schaltfunktion oder Betätigungsfunktion auslösbar ist.

10. Bedieneinrichtung zur Durchführung des Bedienverfahrens nach einem der vorhergehenden Ansprüche, mit einem Bedienelement und einer Steuerung, die dazu ausgebildet ist, das vorbeschriebene Bedienverfahren durchzuführen, wobei das Bedienelement die Form eines bewegbaren Drehknebels oder Schiebereglers aufweist mit einem von dem Bedienelement beeinflussten Schaltgerät, das eine Drehposition oder Schiebeposition bzw. ein Bewegen des Bedienelements erfasst und mit einer Steuerung verbunden ist zur Umsetzung in einen Bedienbefehl bzw. in eine Bedienfunktion für das Elektro-Hausgerät, wobei das Bedienelement eindrückbar ist und dieses Eindrücken von der Steuerung erkennbar ist, **dadurch gekennzeichnet, dass** verschiedene Ablaufprogramme, Menüpunkte oder sonstige Optionen an der Bedieneinrichtung, nämlich an einer deren Oberfläche bildenden Bedienblende, durch Markierungen angezeichnet sind.

## Claims

1. A method for operating an electrical home appliance having an operating device which comprises an operating element in the form of a movable rotary knob or a slide control, including a switching device responsive to the operating element, detecting a rotary position or a slide position or a movement of the operating element, respectively, and being connected to a control for implementation into an operating command or an operating function for the electrical home appliance, **characterized in that** different sequential programs, menu items or other options are marked on the operating device by markings, namely on an operating panel forming the surface of said operating device, wherein in a first operating step, by one-time or repeated movement of the operating element into a rotary position at a certain rotary angle or into a slide position at a certain slide point, a menu item or an operating function, respectively, marked on the operating panel is preselected as a preselection, wherein in a second operating step, by pushing the entire operating element into the operating device, a switching operation is triggered in order to confirm said preselection as final entry of the operating function, for which the control recognizes the pushing-in of the operating element as a switching operation in order to trigger the operating function confirmed thereby on the electrical home appliance.

2. The operating method according to claim 1, **characterized in that** the operating functions which depend on the rotary position or slide position or a movement of the operating element, respectively, are exclusively provided for an activation or deactivation, preferably as an accompanying, additional option to a program sequence, and not for setting one out of several values of a sequential program as an operating function.

3. The operating method according to claim 1 or 2, **characterized in that** some of the rotary positions or slide positions are different, predefined sequential programs which can be preset by corresponding turning or sliding the operating element into the corresponding rotary position or slide position, whereby the control then starts said sequential programs of the electrical home appliance by pressing onto the operating element.

4. The operating method according to claim 1 or 2, **characterized in that** some of the rotary positions or slide positions are different, predefined sequential programs which can be preset by corresponding turning or sliding the operating element into the corresponding rotary position or slide position, whereby the control then starts said sequential programs of the electrical home appliance over a lapse of time, preferably after two to ten seconds.

5. The operating method according to any of the preceding claims, **characterized in that** said method is conducted without indicator lamps or the like.

6. The operating method according to any of the claims 1 through 4, **characterized in that** each rotary position or slide position is assigned an indicator lamp, in particular a light-emitting diode, to indicate by a functional state, in particular blinking, the setting of the corresponding rotary position or slide position by means of the operating element, wherein after pushing-in of the operating element, preferably the indicator lamp indicates it by another functional state, in particular by continuous illumination.

7. The operating method according to any of the preceding claims, **characterized in that** in some of the rotary positions or slide positions a sequential program to be executed is assigned a possible additionally selectable option to the sequential program which option can be preset by setting the corresponding rotary position or slide position and which is then confirmed by pressing the operating element, wherein after presetting of the sequential program, in particular by pressing onto the operating element in the corresponding rotary position or slide position, an option is confirmed by setting the corresponding rotary position or slide position and pressing onto the operating element and then the sequential program is started, preferably by a further pressing onto the operating element.

8. The operating method according to any of the claims 1 through 6, **characterized in that** in some of the rotary positions or slide positions a sequential program to be executed is assigned a possible additionally selectable option to the sequential program which option can be preset by setting the corresponding rotary position or slide position and which is then confirmed by pressing the operating element, wherein after confirming an option, one of several sequential programs assigned to the different positions is set by setting another rotary position or slide position and started by pressing onto the operating element.

9. The operating method according to any of the preceding claims, **characterized in that** a further switching function or actuation function can be triggered by pulling on the operating element.

10. An operating device for conducting the operating method according to any of the preceding claims, including an operating element and a control which is arranged to conduct the previously-described operating method, wherein the operating element is designed as a movable rotary knob or slide control having a switching device responsive to the operating element, detecting a rotary position or a slide position or a movement of the operating element, respectively, and connected to a control for implementation into an operating command or an operating function of the electrical home appliance, wherein the operating element can be pushed in and said pushing-in can be detected by the control, **characterized in that** different sequential programs, menu items or other options are marked on the operating device by markings, namely on an operating panel forming the surface of said operating device.

## Revendications

1. Procédé de commande pour un ' appareil électroménager doté d'un dispositif de commande comportant un élément de commande prenant la forme d'une manette pivotante ou d'un élément de réglage de coulisseau mobile avec un appareil de connexion influencé par l'élément de commande, ledit appareil détectant une position de pivotement ou une position de poussée et/ou un déplacement de l'élément de commande et étant relié à une commande permettant de convertir cette information en un ordre de commande et/ou en une fonction de commande pour l'appareil électroménager, **caractérisé en ce que** différents programmes séquentiels, points de menu ou options spécifiques sont indiqués au dispositif de commande, notamment à un panneau de commande formant sa surface, par le biais de marquages, un point de menu et/ou une fonction de commande spécifiés au niveau du panneau de commande étant présélectionnés pour servir de présélection lors d'une première étape de commande, par déplacement unique ou multiple de l'élément de commande dans une position de pivotement avec un angle de rotation défini ou dans une position de poussée contre un point de poussée défini, un processus de connexion étant déclenché lors d'une deuxième étape de commande par enfoncement de l'ensemble de l'élément de commande dans le dispositif de commande pour confirmer cette présélection comme saisie définitive de la fonction de commande, la commande reconnaissant l'enfoncement de
l'élément de commande comme un processus de connexion permettant de déclencher la fonction de commande ainsi confirmée au niveau de l'appareil électroménager.

2. Procédé de commande selon la revendication 1, **caractérisé en ce que** les fonctions de commande dépendant de la position de pivotement ou de la position de poussée et/ou d'un déplacement de l'élément de commande ne sont prévues que pour une activation ou une désactivation, de préférence sous la forme d'options supplémentaires d'accompagnement d'une séquence de programme et non pour le réglage d'une valeur parmi plusieurs valeurs d'un programme séquentiel servant de fonction de commande.

3. Procédé de commande selon la revendication 1 ou 2, **caractérisé en ce que** quelques-unes des positions de pivotement ou des positions de poussée sont des programmes séquentiels prédéfinis différents préréglés par rotation ou coulissement correspondant de l'élément de commande dans la position de pivotement ou dans la position de poussée correspondante, la commande démarrant ces programmes séquentiels au niveau de l'appareil électroménager en appuyant sur l'élément de commande .

4. Procédé de commande selon la revendication 1 ou 2, **caractérisé en ce que** quelques-unes des positions de pivotement ou des positions de poussée sont des programmes séquentiels prédéfinis différents préréglés par la rotation ou le coulissement correspondant de l'élément de commande dans la position de pivotement ou la position de poussée correspondante, la commande démarrant ces programmes séquentiels au niveau de l'appareil électrique après un certain temps, de préférence après deux à dix secondes.

5. Procédé de commande selon l'une quelconque des revendications précédentes, **caractérisé en ce qu'**il est réalisé sans affichage éclairé ou son équivalent.

6. Procédé de commande selon l'une quelconque des revendications 1 à 4, **caractérisé en ce qu'**un affichage éclairé, notamment une DEL, est associé à chaque position de pivotement ou à chaque position de poussée et indique par un état fonctionnel, notamment un clignotement, le réglage de la position de pivotement ou de la position de poussée correspondante à l'aide de l'élément de commande, l'affichage éclairé indiquant de préférence cette information par un autre état fonctionnel, notamment l'éclairage permanent, après enfoncement de l'élément de commande.

7. Procédé de commande selon l'une quelconque des revendications précédentes, **caractérisé en ce qu'**une option sélectionnable en sus et possible pour le programme séquentiel est associée à un programme séquentiel à mettre en oeuvre dans certaines des positions de pivotement ou des positions de poussée, ladite option étant préréglée par réglage de la position de pivotement ou de la position de poussée correspondante puis confirmée par enfoncement de l'élément de commande, une option étant confirmée par réglage de la position de pivotement ou de la position de poussée correspondante et par enfoncement de l'élément de commande après le préréglage du programme séquentiel, notamment par enfoncement de l'élément de commande dans la position de pivotement ou la position de poussée correspondante, suivie du lancement du programme séquentiel, de préférence par pression supplémentaire sur l'élément de commande.

8. Procédé de commande selon l'une quelconque des revendications 1 à 6, **caractérisé en ce qu'**une option sélectionnable en sus et possible pour le programme séquentiel est associée à un programme séquentiel à mettre en oeuvre dans certaines des positions de pivotement ou des positions de poussée préréglées par réglage de la position de pivotement ou de la position de poussée correspondante et confirmée par enfoncement de l'élément de commande, un programme parmi plusieurs programmes séquentiels associés à différentes positions étant préréglé après confirmation d'une option, par réglage d'une position de pivotement ou d'une position de poussée supplémentaire et lancé par enfoncement de l'élément de commande.

9. Procédé de commande selon l'une quelconque des revendications précédentes, **caractérisé en ce qu'**une fonction de connexion ou une fonction d'actionnement supplémentaire peut être déclenchée en tirant sur l'élément de commande.

10. Dispositif de commande mettant en oeuvre le procédé de commande selon l'une quelconque des revendications précédentes, avec un élément de commande et une commande conçus pour mettre en oeuvre le procédé de commande précédemment décrit, l'élément de commande prenant la forme d'une manette pivotante ou d'un élément de réglage de coulisseau mobile avec un appareil de connexion influencé par l'élément de commande, ledit appareil détectant une position de pivotement ou une position de poussée et/ou un déplacement de l'élément de commande et étant relié à une commande permettant de convertir cette information en un ordre de commande et/ou en une fonction de commande pour l'appareil électroménager, l'élément de commande pouvant être enfoncé et cet enfoncement pouvant être détecté par la commande, **caractérisé en ce que** différents programmes séquentiels, points de menu ou options spécifiques sont indiqués au dispositif de commande, notamment à un panneau de commande formant sa surface, par le biais de marquages.
